# EUROPÄISCHE PATENTSCHRIFT

(11) **EP 3 183 537 B1**
(45) Veröffentlichungstag und Bekanntmachung des Hinweises auf die Patenterteilung: **17.10.2018**
(21) Anmeldenummer: 16777526.1
(22) Anmeldetag: 12.08.2016
(51) Int. Cl.: G01D 5/20, G01B 7/00, G01B 7/02

(54) **VORRICHTUNG UND SENSOR ZUR KONTAKTLOSEN ABSTANDS- UND/ODER POSITIONSBESTIMMUNG EINES MESSOBJEKTES**
SYSTEM AND SENSOR FOR CONTACTLESS DISTANCE AND/OR POSITION DETERMINATION OF A MEASURED OBJECT
SYSTÈME ET CAPTEUR POUR LA DÉTERMINATION SANS CONTACT DE DISTANCE ET/OU DE POSITION D'UN OBJET MESURÉ

(30) Priorität: 15.09.2015 DE 102015217625; 09.11.2015 DE 102015222017
(43) Veröffentlichungstag der Anmeldung: 28.06.2017
(73) Patentinhaber: Micro-Epsilon Messtechnik GmbH & Co. KG, 94496 Ortenburg (DE)
(72) Erfinder: HOENICKA, Reinhold, 94496 Ortenburg (DE); SCHOPF, Tobias, 84364 Bad Birnbach (DE); STIESS, Jakob, 94081 Fürstenzell (DE)
(74) Vertreter: Patent- und Rechtsanwälte Ullrich & Naumann
(86) Internationale Anmeldenummer: PCT/DE2016/200376
(87) Internationale Veröffentlichungsnummer: WO 2017/045675

(56) Entgegenhaltungen:
- EP-A1- 2 690 411
- EP-A2- 1 281 936
- DE-A1- 4 239 635
- GB-A- 2 136 580
- US-A- 6 107 794
- US-A1- 2006 096 396

## Beschreibung

Die Erfindung betrifft eine Vorrichtung zur kontaktlosen Abstands- und/oder Positionsbestimmung eines Messobjektes, mit einem elektrisch leitfähigen Messobjekt und einem insbesondere nach dem induktiven, dem kapazitiven oder dem Wirbelstrom-Prinzip arbeitenden Sensor, wobei der Sensor eine Messeinrichtung aufweist, wobei das Messobjekt in axialer Richtung gesehen gegenüber von der Messeinrichtung an einem beweglichen Objekt angeordnet ist oder integraler Bestandteil des beweglichen Objektes ist und sich mit diesem in axialer Richtung bewegt

Stellglieder für Weg/Position (Aktoren) werden sehr häufig in geschlossenen Regelkreisen betrieben. Um dies zu ermöglichen, ist ein Sensor zur Erfassung des Stellwegs (bzw. Abstand/Position/Auslenkung) erforderlich. Hierzu gibt es eine Reihe von Messverfahren (optische, elektromagnetische, taktile), die den Stand der Technik repräsentieren.

Vielen Anwendungen liegt die Aufgabe zugrunde, das Aktor/Sensor-System möglichst kompakt aufzubauen. Dabei ergibt sich in der Praxis häufig eine Ausprägung der Bauform, bei der über das Stellglied eine axiale Bewegung eines Zylinders/Kolbens/Nadel/Welle/Stange/Stößel ausgeführt wird. Da aufgrund von Bauraumbeschränkungen eine axiale, direkte Erfassung der Bewegung nicht möglich ist, wird häufig ein anzubringendes Target/Messfahne so angeordnet, dass eine seitliche Anbringung des Sensors möglich ist.

Beispielsweise wird dies in der deutschen Offenlegungsschrift DE 42 39 635 A1 gezeigt. Darin wird in einem elektropneumatischen Stellungsregler an der Ventilstange ein elektrisch leitfähiges Metallelement angebracht. Ein seitlich angebrachter Wegsensor erfasst die axiale Bewegung des Metallelementes und damit die Position der Ventilstange.

In der Praxis tritt bei elektromagnetischen Sensoren (Wirbelstrom, kapazitiv) aufgrund der räumlichen Ausdehnung des elektrischen oder magnetischen Feldes das Problem einer störenden Wechselwirkung (neben der gewollten Wechselwirkung mit dem Target) mit dem ausgelenkten Mechanismus auf. Es besteht das Problem, dass bei einem geforderten Messbereich ein seitlich angeordneter, feldgebundener, berührungsloser Sensor ein räumlich zu ausgedehntes Feld erzeugt. Das ausgedehnte Feld wird durch andere bewegte oder statische Objekte des Aktors in der Nähe gestört, was zu Messfehlern führt. Durch eine Verkleinerung der Baugröße des Sensors wird der Messbereich verkleinert, so dass dies keine zufriedenstellende Lösung dieser Problematik darstellt.
Ein weiteres Problem, das bei den entsprechend dem Stand der Technik seitlich angeordneten Sensoren auftritt, wird durch die in der Praxis häufig vorkommenden überlagerten Bewegungen verursacht. Das heißt, die Bewegung des Targets zum Sensor erfolgt nicht nur axial, sondern ist beispielsweise auch als Kippbewegung ausgeprägt. Dies kann zu erheblichen Messfehlern führen.
Nach dem Stand der Technik wird dieses Problem durch die Anordnung von mehreren Sensoren gelöst. In der DE 42 39 635 A1 werden dazu zwei Sensoren um 180° versetzt gegenüber angeordnet, wobei die Sensoren gegen eine schiefe Ebene messen. Dies führt jedoch zu einem höheren konstruktiven Aufwand und somit einer Kostenerhöhung. Ein weiteres Problem der seitlich angeordneten Sensoren ist der große Raumbedarf in Längsrichtung.

Des Weiteren sind aus den Dokumenten EP 1 281 936 A2, EP 2 690 411 A1, US 2006/096396 A1, GB 2 136 580 A und US 6 107 794 A Sensoren vorbekannt.
Der vorliegenden Erfindung liegt somit die Aufgabe zugrunde, eine gattungsbildende Vorrichtung zur kontaktlosen Abstands- und/oder Positionsbestimmung eines Messobjektes derart auszugestalten und weiterzubilden, dass mit konstruktiv einfachen Mitteln eine kompakte und kostengünstige Vorrichtung realisierbar ist, die eine präzise Abstands- und/oder Positionsbestimmung ermöglicht.

Erfindungsgemäß wird die voranstehende Aufgabe durch die Merkmale des Anspruches 1 gelöst. Danach ist die in Rede stehende Vorrichtung zur kontaktlosen Abstands- und/oder Positionsbestimmung eines Messobjektes dadurch gekennzeichnet, dass die Messeinrichtung durch zumindest zwei räumlich voneinander getrennte Messelemente gebildet ist, dass die Messelemente (5, 5', 5") auf einem gemeinsamen Substrat (6) angeordnet sind und dass das Substrat (6) einen Durchgang (9) für das bewegliche Objekt (2) aufweist.

In erfindungsgemäßer Weise ist erkannt worden, dass die zugrunde liegende Aufgabe in verblüffend einfacher Weise durch eine geschickte Ausgestaltung der Messeinrichtung gelöst werden kann. Dabei handelt es sich bei der Messeinrichtung um den Bestandteil des Sensors, der das für die Messung benötigte elektrische, magnetische bzw. elektromagnetische Feld erzeugt. Im Prinzip wird ein großes Messelement, nämlich die Messeinrichtung, aufgeteilt in mehrere kleine Messelemente, die jedes für sich gesehen eine kleinere Baugröße und damit eine kleinere Feldverteilung besitzen als ein großes Messelement. Durch die Aufteilung können die Messelemente geometrisch geschickt angeordnet werden, um trotzdem einen großen Messbereich zu erzielen. Ein weiterer Vorteil ist, dass das Streufeld der Messelemente verringert ist, wodurch die Beeinflussung von außen reduziert wird. Durch eine symmetrische Anordnung der Messelemente kann auch eine Verkippung des Messobjektes kompensiert werden. Die Vorrichtung kann mindestens zwei, vorzugsweise drei, Messelemente aufweisen, die räumlich voneinander getrennt sind und gemeinsam die Messeinrichtung bilden. Allgemein kann eine beliebig große Anzahl n von Messelementen angeordnet sein, die gemeinsam die Messeinrichtung bilden. Die Messelemente können dabei über eine gemeinsame Messelektronik bzw. Auswerteelektronik versorgt werden.

Zur Realisierung einer besonders einfachen und kompakten Vorrichtung sind die Messelemente auf einem gemeinsamen Substrat angeordnet. Mit Substrat sei im Folgenden jede Art von Trägermaterial für Messelemente oder Elektronikbausteine bezeichnet (z.B. Leiterplatte, Keramik, Mehrlagen-Keramik). In weiter vorteilhafter Weise sind die Messelemente in einer Ebene angeordnet.

Der Sensor kann als induktiver oder Wirbelstrom-Wegsensor arbeiten. Die Messeeinrichtung kann dabei eine Spule sein, die in mehrere als (Teil-)Spulen realisierte Messelemente aufgeteilt ist. Die (Teil-)spulen können in Reihe geschaltet sein, so dass sich deren Induktivität addiert.

Die (Teil-)Spulen können als gewickelte Spulen oder als Flachspulen ausgeführt sein. Bei der Ausgestaltung als Flachspulen können diese beispielsweise auf Leiterplatten oder auf Keramiksubstraten ausgebildet sein. Alternativ können die (Teil-)Spulen in mehrlagigen Keramikschichten ausgebildet sein, die in Low Temperature Cofired Ceramics Technik (LTCC-Technik) bzw. in High Temperature Cofired Ceramics Technik (HTCC-Technik) hergestellt sein können. Die Spulen in LTCC- oder HTCC-Technik sind besonders vorteilhaft, da damit mehrlagige Spulen mit hoher Induktivität in geringer Baugröße hergestellt werden können. Des Weiteren können die (Teil-)Spulen mit dem Substrat eine Einheit bilden und kann in dieser Einheit bereits die Verschaltung der (Teil-)Spulen realisiert sein. Die Spulen des induktiven bzw. Wirbelstrom-Wegsensors können Teil einer Auswerteelektronik sein, die die Amplitude, die Frequenz und/oder die Phase auswertet. Auch eine Kombination von zwei oder drei dieser Größen kann verwendet werden.

Des Weiteren ist denkbar, dass der Sensor als kapazitiver (Weg-)Sensor ausgestaltet ist. Die Messeinrichtung ist dann eine metallische Fläche, die in bekannter Weise als Elektrode eines Plattenkondensators wirkt. Das Messobjekt dient als Gegenelektrode, so dass diese Messelektrode und das Messobjekt einen Plattenkondensator bilden. Die Messelektrode, d.h. die Messeinrichtung, kann dabei in mehrere Teilflächen, d.h. Messelemente, unterteilt sein, die wiederum räumlich voneinander getrennt angeordnet sind. Die (Teil-)Elektroden bzw. Messelemente können parallel geschaltet sein, so dass sich die Kapazität der (Teil-)Elektroden aufsummiert. Diese können von einer gemeinsamen Auswerteelektronik angesteuert werden. Die (Teil-)Elektroden können beispielsweise auf Leiterplatten, auf Keramiksubstraten oder in LTCC- oder HTCC-Technik hergestellten mehrlagigen Keramikschichten angeordnet sein. Des Weiteren können die (Teil-)Elektroden mit dem Substrat eine Einheit bilden und kann in dieser Einheit bereits die Verschaltung der (Teil-)Elektroden realisiert sein.

Ein besonderer Vorteil der erfindungsgemäßen Anordnung nach Anspruch 1 ist, dass eine einzige Auswerteelektronik für mehrere Messelemente verwendbar ist. Die Auswerteelektronik kann die übergeordneten Messelemente bedienen und diese als Einheit betrachten. Somit werden Bauraum und Kosten eingespart und Wärmeentwicklung/Energieverbrauch minimiert. Ein weiterer Vorteil liegt in der Möglichkeit der gleichphasigen und gleichfrequenten Ansteuerung der einzelnen Messelemente, wodurch Messfehler aufgrund der Wechselwirkung zwischen den Messelementen vermieden werden. Das mehrteilige Messelement ist jedoch gerade nicht eine klassische Brückenschaltung. Eine Brückenschaltung würde jeweils einen Abgriff zwischen den Messelementen erfordern und ist nur zur Auswertung differentieller Signale geeignet. Beispielsweise wird bei einer Halbbrückenanordnung das Signal in einem Messelement verstärkt, im anderen abgeschwächt, so dass aus der Differenz der Teilsignale ein Messsignal resultiert. In der erfindungsgemäßen Anordnung dagegen wirken alle Messelemente in dieselbe Richtung, so dass sich die Teilsignale aufsummieren und das Messsignal verstärkt wird. Ein elektrischer Abgriff zwischen den Teilelementen findet nicht statt. Ein weiterer Vorteil ist, dass entgegen einer klassischen Wheatstone-Brückenschaltung mit vier elektrischen Abgriffen nur zwei elektrische Abgriffe erforderlich sind, nämlich eine Zu- und eine Ableitung für die Spule bzw. die Elektrode. Die Auswerteelektronik kann rein mit Analogbausteinen aufgebaut sein, woraus ein analoges Messsignal erzeugt wird. Alternativ könnte als Auswerteelektronik auch eine digitale Elektronik eingesetzt werden, die digitalisierte Signale liefert, beispielsweise ein PWM-Signal. Wird ein Microcontroller eingesetzt, kann auch ein Digitalsignal beispielsweise über eine Busschnittstelle zur Verfügung gestellt werden.

Da die Messelemente als Summenschaltung funktionieren können, werden Störungen wie z.B. der Temperatureinfluss auf die Messelemente bzw. die Messeinrichtung nicht automatisch auskompensiert. Daher kann als separate Temperaturkompensation das Messelement mit einer Gleichspannung beaufschlagt sein, nämlich zur Temperaturbestimmung. Die Gleichstromimpedanz des Messelementes ist proportional zum ohmschen Widerstand, der temperaturabhängig ist. Damit kann eine Temperaturkompensation des Wegsensors in der Auswerteelektronik erzielt werden. Durch die Summenschaltung der Messelemente kann auch eine Kompensation des Einflusses von Temperaturgradienten erreicht werden. Temperaturgradienten treten auf, wenn die Temperatur an einer Seite des Messelementes eine andere ist als an einer anderen Seite. Es stellt sich eine Temperaturverteilung über das Messelement ein, die zu örtlich unterschiedlichen Temperaturfehlern führt. Durch die Messung der Gleichstromimpedanz des gesamten mehrteiligen Messelementes kann an jeder Stelle die (lokale) Gleichstromimpedanz aufsummiert werden und somit der Einfluss des Temperaturgradienten über das gesamte Messelement kompensiert werden. Alternativ kann ein Temperatursensor auf dem Substrat angeordnet sein oder können mehrere Temperatursensoren an unterschiedlichen Stellen des Subtrates zur Temperaturkompensation angeordnet sein.

Die Auswerteelektronik für den Wegsensor kann direkt auf dem Substrat, das die Messelemente trägt, angeordnet sein. Eine besonders kompakte Bauform kann erreicht werden, wenn die Auswerteelektronik auf der Rückseite, d.h. der den Messelementen abgewandten Seite des Substrats angebracht ist. Alternativ kann die Auswerteelektronik auch auf einem, vorzugsweise ringförmigen, separaten Substrat angeordnet sein. Die elektrische Verbindung der Messelemente zur Auswerteelektronik kann beispielsweise über starre Kontaktstifte erfolgen, die gleichzeitig eine mechanische Verbindung und damit Fixierung darstellen. Die Auswerteelektronik und die Messelemente bilden dabei eine kompakte Einheit, die als eigenes Objekt innerhalb des Aktors eingebaut werden kann. Ein eigenes Gehäuse für den Sensor kann damit eingespart werden.

Ebenso könnte die elektrische Verbindung zwischen der Auswerteelektronik und den Messelementen und/oder die Zuführung der Versorgungsspannung zu den Messelementen über einen Flexleiter erfolgen. Besonders vorteilhaft ist eine Starr-Flex-Verbindung, bei der der Flexleiter in das Substrat eingearbeitet ist. Damit kann in Anwendungen eine mechanische Entkopplung erreicht werden, bei denen aufgrund der Einbausituation beispielsweise erhöhte Schock- oder Vibrationsbelastungen auftreten. Die Auswerteelektronik kann bei dieser Ausgestaltung in einem Bereich angeordnet sein, in dem lediglich eine geringe bzw. keine Belastung auf die Bauelemente einwirkt, während die Messeinrichtung bzw. die Messelemente entkoppelt an der Messstelle mit Schock- und Vibrationsbelastung ausgebildet ist/sind. Da die Messeinrichtung bzw. die Messelemente nur gedruckte Leiterbahnen oder Elektrodenflächen umfassen kann/können, ist die Vorrichtung äußerst unempfindlich gegenüber derartigen Belastungen. Wenn die Auswerteelektronik bereits auf der Rückseite des Substrates angeordnet ist, können auch die Zuführung der Versorgungsspannung und die Ableitung der Sensorsignale beispielsweise über Flexleiter, Kontaktstifte, Kabel oder sonstige elektrische Verbindungen erfolgen.

Die Messeinrichtung bzw. die Messelemente sind in einem Wirkzusammenhang mit einem Messobjekt angeordnet. Das Messobjekt ist elektrisch leitfähig und kann integraler Bestandteil des bewegten Objektes (beispielsweise eines Aktors bzw. Stellgliedes) sein, dessen Auslenkung/Position/Abstand gemessen werden soll. Es kann aber auch speziell zum Zweck der Messung am bewegten Objekt angebracht sein. Wenn sich der Abstand des Messobjektes zum Wegsensor ändert, ändert sich die Induktivität bzw. die Kapazität der Messelemente. Die Induktivitäts- bzw. Kapazitätsänderung kann in der Auswerteelektronik in ein analoges oder digitales Signal umgewandelt werden, das proportional zur Auslenkung/Position/Abstand des bewegten Objektes ist. Im Konkreten können die Messelemente auf einer gemeinsamen Seite gegenüber dem Messobjekt angeordnet sein und die Auslenkung/Verlagerung/Position des Messobjektes in eine Bewegungsrichtung messen, die im Wesentlichen senkrecht zur Fläche der Messelemente gerichtet ist.

Eine besonders günstige Anordnung der Messelemente in einem Aktor ist realisiert, wenn die Messelemente konzentrisch um das Stellglied angeordnet sind. In erfindungsgemäßer Weise weist das die Messelemente tragende Substrat einen Durchgang für ein bewegliches Objekt, beispielsweise einen Aktor bzw. ein Stellglied, auf. Insbesondere kann das Substrat ringförmig ausgebildet sein und/oder können die Messelemente alle in einer gemeinsamen Messachse (axial) die Bewegung/Position/Auslenkung des Messobjektes erfassen. Der räumliche Mittelpunkt der Messachse ist in diesem Fall deckungsgleich mit der Mitte der Bewegungsachse des Stellgliedes. Das Stellglied kann beispielsweise der Kolben eines Zylinder sein, oder die Nadel oder der Schaft eines Mikroventils, eine drehende Welle oder eine Stange eines pneumatischen Stellantriebes. Bei der konzentrischen Anordnung um den Durchgang und somit das Stellglied kann der zur Verfügung stehende Bauraum optimal ausgenutzt werden. Dabei ist es nicht erforderlich, dass die Messelemente eine runde Form aufweisen. Die Form der Messelemente kann der Geometrie des Stellglieds und/oder des an dem Stellglied angeordneten elektrisch leitfähigen Messobjektes angepasst sein. Beispielsweise können die Messelemente eine runde, kreissegmentförmige, ovale oder mehreckige, insbesondere dreieckige oder viereckige, Geometrie aufweisen. Bei (Teil-)Spulen muss lediglich eine gewisse Grundinduktivität erreicht werden, bei (Teil-)Elektroden eine Grundkapazität.

Eine besonders günstige Einbauart wird dadurch erreicht, dass der Sensor und/oder das Substrat mit Hilfe eines federnden Elementes gegen ein festes Bauteil des Aktorgehäuses gepresst wird, beispielsweise eine Kante, die als Festanschlag dient. Besonders vorteilhaft ist dies bei sich ändernden Temperaturbedingungen. Wenn sich die unterschiedlichen Materialien in der Aktor-Sensor-Einheit unterschiedlich ausdehnen, können mechanische Spannungen entstehen, die entweder den Sensor oder den Aktor beschädigen oder zu Messwertverfälschungen führen. Durch die federnde Einbaulage wird dies vermindert oder ausgeschlossen und es ist sichergestellt, dass sich das Substrat mit den Messelementen immer in einer festen Relativposition zu dem Aktor und damit zu dem Messobjekt befindet. Bei einem runden Substrat kann das federnde Element beispielsweise als Tellerfeder oder Wellscheibe ausgeführt sein. Aber auch andere federnde (elastische) Elemente können verwendet werden, beispielsweise auch ein geeignetes Polymer, Kunststoff etc. Günstig ist eine Dreipunktauflage, wodurch ein mechanisch überbestimmtes System vermieden wird.

Des Weiteren ist ein Sensor beschrieben, bei dem die Messeinrichtung durch zumindest zwei räumlich voneinander getrennte Messelemente gebildet ist.

Zur Vermeidung von Wiederholungen sei bezüglich der Ausgestaltung des Sensors auf die voranstehenden Ausführungen bezüglich der erfindungsgemäßen Vorrichtung und des in dieser Vorrichtung realisierten Sensors verwiesen. Die konstruktiven Merkmale des in der erfindungsgemäßen Vorrichtung nach Anspruch 1 ausgebildeten Sensors können ausdrücklich von dem beschriebenen Sensor nach Anspruch 15 realisiert sein, so dass dieser auch die voranstehend genannten Vorteile aufweisen kann.

Es gibt nun verschiedene Möglichkeiten, die Lehre der vorliegenden Erfindung in vorteilhafter Weise auszugestalten und weiterzubilden. Dazu ist einerseits auf die dem Anspruch 1 nachgeordneten Ansprüche und andererseits auf die nachfolgende Erläuterung bevorzugter Ausführungsbeispiele der Erfindung anhand der Zeichnung zu verweisen. In Verbindung mit der Erläuterung der bevorzugten Ausführungsbeispiele der Erfindung anhand der Zeichnung werden auch im Allgemeinen bevorzugte Ausgestaltungen und Weiterbildungen der Lehre erläutert. In der Zeichnung zeigen
- Fig. 1: eine aus dem Stand der Technik bekannte Vorrichtung zur kontaktlosen Abstands- und/oder Positionsbestimmung eines Messobjektes,
- Fig. 2: in einer schematischen, geschnittenen Seitenansicht ein Ausführungsbeispiel einer erfindungsgemäßen Vorrichtung umfassend einen erfindungsgemäßen Sensor,
- Fig. 3: in einer schematischen Darstellung zwei Ausführungsbeispiele der Messeinrichtung eines erfindungsgemäßen Sensors,
- Fig. 4a: in einer schematischen Darstellung ein Ausführungsbeispiel eines Ersatzschaltbildes eines Sensors einer erfindungsgemäßen Vorrichtung,
- Fig. 4b: in einer schematischen Darstellung ein weiteres Ausführungsbeispiel eines Ersatzschaltbildes eines Sensors einer erfindungsgemäßen Vorrichtung,
- Fig. 5: in einer schematischen, geschnittenen Seitenansicht ein weiteres Ausführungsbeispiel eines Sensors einer erfindungsgemäßen Vorrichtung,
- Fig. 6: in einer schematischen, geschnittenen Seitenansicht ein weiteres Ausführungsbeispiel eines Sensors einer erfindungsgemäßen Vorrichtung, und
- Fig. 7: in einer schematischen, geschnittenen Seitenansicht ein weiteres Ausführungsbeispiel einer erfindungsgemäßen Vorrichtung im ausgebauten sowie im eingebauten Zustand.

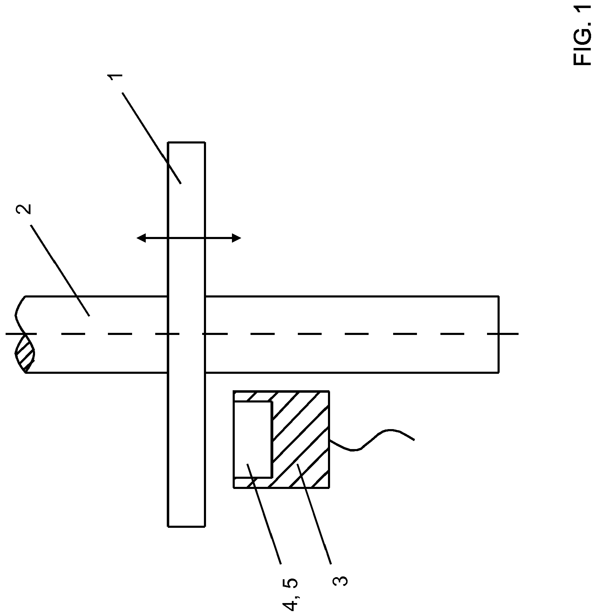

Figur 1 zeigt eine aus dem Stand der Technik bekannte Vorrichtung zur kontaktlosen Abstands- und/oder Positionsbestimmung eines Messobjektes 1. Das Messobjekt 1 ist aus einem elektrisch leitfähigen Werkstoff hergestellt und an einem Stellglied 2, beispielsweise einer Ventilstange, angeordnet. Das Stellglied 2 und somit das Messobjekt 1 sind entlang des eingezeichneten Pfeils bewegbar. Seitlich des Stellglieds 2 ist ein Sensor 3 vorgesehen, der kontaktlos den Abstand zu dem Messobjekt 1 misst. Dazu weist der Sensor 3 eine Messeinrichtung 4 bzw. ein Messelement 5 auf, das als Spule ausgebildet ist.

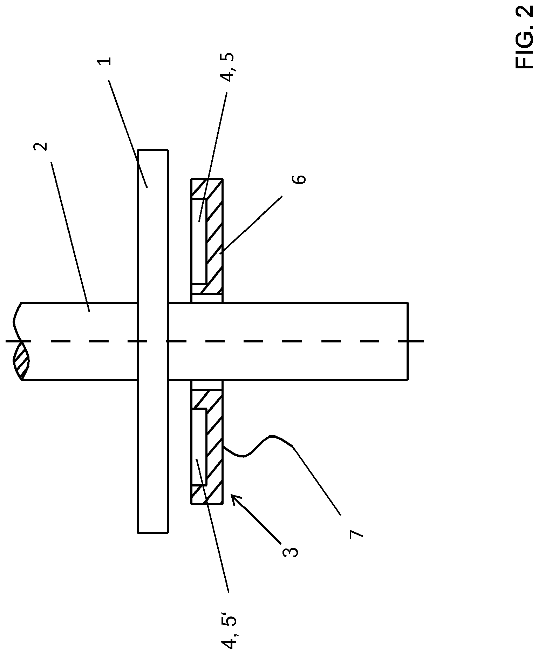

Figur 2 zeigt in einer schematischen, geschnittenen Seitenansicht ein Ausführungsbeispiel einer erfindungsgemäßen Vorrichtung umfassend einen erfindungsgemäßen Sensor 3. An dem Stellglied 2 ist ein Messobjekt 1 vorgesehen, das sich mit dem Stellglied 2 in axialer Richtung bewegt. Gegenüber dem Messobjekt 1 ist ein Substrat 6 angeordnet, das Messelemente 5, 5' enthält, die gemeinsam die Messeinrichtung 4 bilden. Die Messelemente 5, 5' sind auf der dem Messobjekt 1 zugewandten Seite angebracht. Über die elektrische Verbindung 7 sind die Messelemente 5, 5' mit der zugehörigen Auswerteelektronik 8 verbunden. Die Auswerteelektronik 8 ist zur vereinfachten Darstellung in Figur 2 nicht gezeigt.

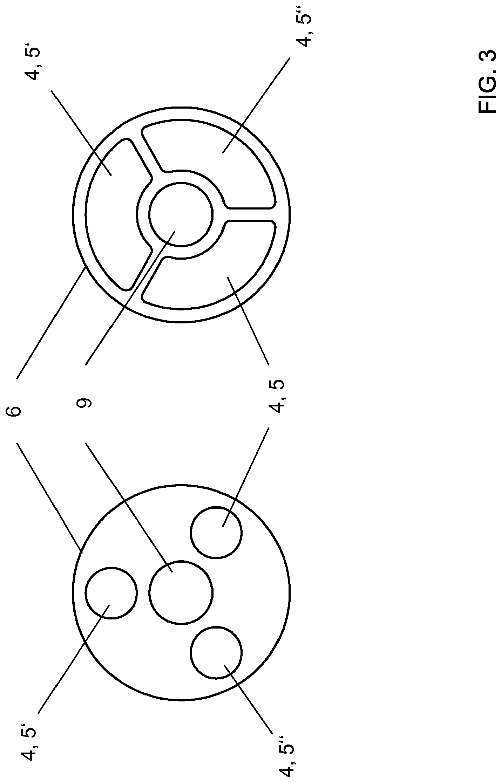

Figur 3 zeigt in einer schematischen Darstellung zwei Ausführungsbeispiele der Messeinrichtung 4 eines erfindungsgemäßen Sensors 3. Gezeigt sind jeweils drei Messelemente 5, 5', 5" in Draufsicht, die konzentrisch um einen Durchgang 9 in dem Substrat 6 angeordnet sind und gemeinsam die Messeinrichtung 4 bilden. Der Durchgang 9 dient zur Aufnahme des Stellgliedes 2. Die Messelemente 5, 5', 5" können (Teil-)Spulen eines induktiven oder Wirbelstrom-(Weg-)Sensors sein, oder als (Teil-)Elektroden eines kapazitiven (Weg-)Sensors ausgebildet sein.

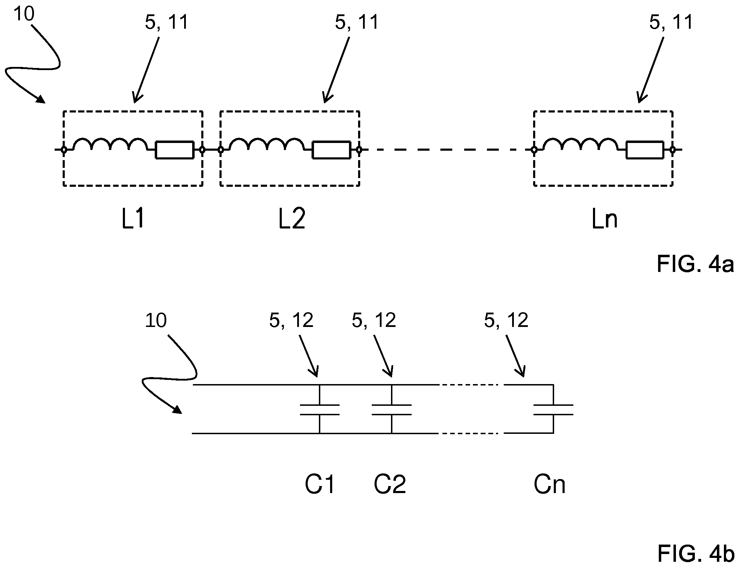

Figur 4a zeigt in einer schematischen Darstellung ein Ausführungsbeispiel eines Ersatzschaltbildes 10 eines erfindungsgemäßen Sensors 3. Im Konkreten ist das Ersatzschaltbild 10 der Messelemente 5 eines Wirbelstromsensors, die als (Teil-)Spulen 11 ausgestaltet sind, gezeigt. Es handelt sich um n (Teil-)Spulen 11 mit Induktivität L₁,...Lₙ in Reihenschaltung. Damit ergibt sich eine Gesamtinduktivität von L_{ges} = L₁ + L₂ +... + Lₙ.

Figur 4b zeigt in einer schematischen Darstellung ein weiteres Ausführungsbeispiel eines Ersatzschaltbildes 10 eines erfindungsgemäßen Sensors 3. Dabei ist konkret das Ersatzschaltbild 10 der Messeelemente 5 eines kapazitiven Sensors 3 dargestellt. Es handelt sich um n (Teil-)Elektroden 12 mit Kapazität C₁,...Cₙ in Parallelschaltung. Damit ergibt sich eine Gesamtkapazität von C_{ges} = C₁ + C₂ +... + Cₙ.

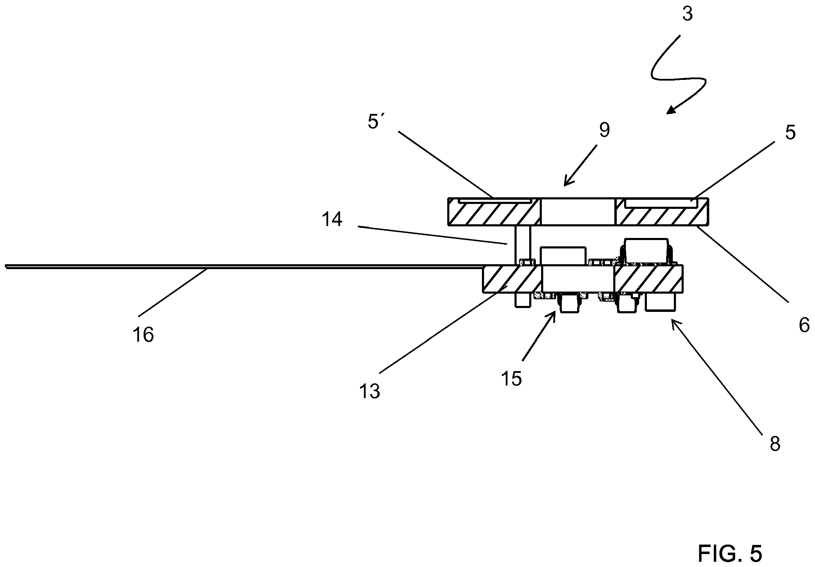

Figur 5 zeigt in einer schematischen, geschnittenen Seitenansicht ein weiteres Ausführungsbeispiel eines erfindungsgemäßen Sensors 3. Der Sensor 3 umfasst die Messelemente 5, 5' die auf einem Substrat 6 angeordnet sind, sowie die Auswerteelektronik 8. Die Auswerteelektronik 8 ist auf einem separaten Substrat 13 angeordnet und mit den Messelementen 5, 5' über Kontaktstifte 14 verbunden. Alternativ könnte anstelle der Kontaktstifte 14 auch ein Flexleiter als elektrische Verbindung dienen. Auch das separate Substrat 13 für die Auswerteelektronik 8 weist in der Mitte einen Durchgang 15 auf, durch den sich das Stellglied 2 (nicht eingezeichnet) in axialer Richtung bewegt. Die Auswerteelektronik 8 ist über einen Flexleiter 16 mit der übergeordneten Regelung des Aktors verbunden.

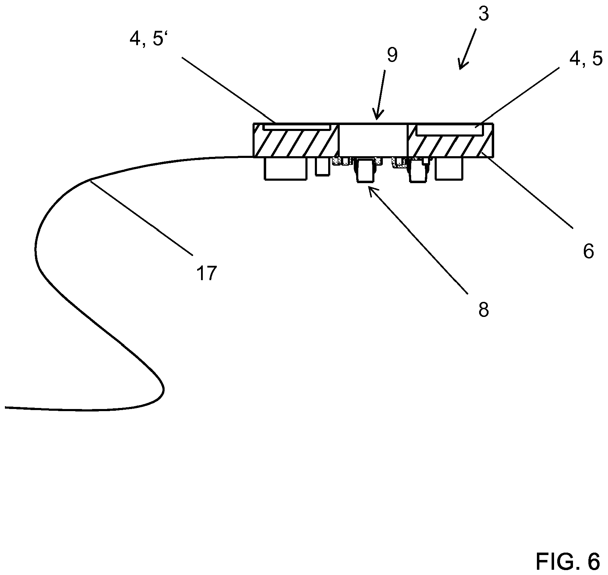

Figur 6 zeigt in einer schematischen, geschnittenen Seitenansicht ein weiteres Ausführungsbeispiel eines erfindungsgemäßen Sensors 3. Der Sensor 3 weist eine besonders kompakte Anordnung auf. Die Messelemente 5, 5' und die Auswerteelektronik 8 sind auf demselben Substrat 6 angeordnet. Die Messelemente 5, 5' befinden sich auf der Oberseite in Wirkzusammenhang mit dem Messobjekt 1 (nicht eingezeichnet), während die Bauteile der Auswerteelektronik 8 auf der Unterseite bestückt sind. Die Versorgungsspannung und die Sensorsignale werden über eine Leitung 17 zu- bzw. abgeführt.

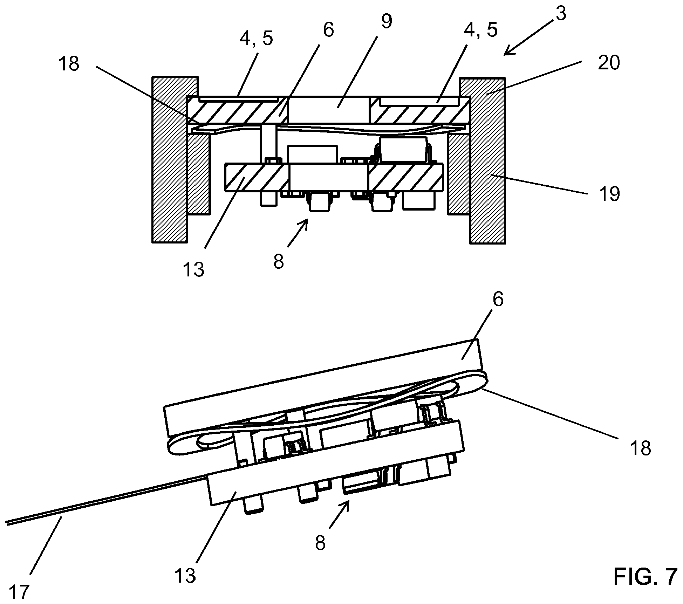

Figur 7 zeigt in einer schematischen, geschnittenen Seitenansicht ein weiteres Ausführungsbeispiel einer erfindungsgemäßen Vorrichtung im ausgebauten sowie im eingebauten Zustand. Dabei ist in der oberen Darstellung (eingebauter Zustand) der Sensor 3 mit Hilfe einer Wellscheibe 18 in dem Aktorgehäuse 19 positioniert. Die Wellscheibe 18 drückt von der Unterseite das Substrat 6 gegen einen Anschlag 20 (Absatz im Aktorgehäuse 19). Damit werden mechanische Spannungen ausgeglichen, die beispielsweise durch Temperaturänderungen auftreten.

An dieser Stelle sei ausdrücklich darauf hingewiesen, dass der in den Figuren gezeigte Sensor 3 einen Teil der erfindungsgemäßen Vorrichtung gemäß den Ansprüchen 1 bis 14 darstellt bzw. darstellen kann.

Hinsichtlich weiterer vorteilhafter Ausgestaltungen der erfindungsgemäßen Vorrichtung wird zur Vermeidung von Wiederholungen auf den allgemeinen Teil der Beschreibung sowie auf die beigefügten Ansprüche verwiesen.

Schließlich sei ausdrücklich darauf hingewiesen, dass die voranstehend beschriebenen Ausführungsbeispiele der erfindungsgemäßen Vorrichtung lediglich zur Erörterung der beanspruchten Lehre dienen, diese jedoch nicht auf die Ausführungsbeispiele einschränken.

### Bezugszeichenliste

- 1: Messobjekt
- 2: Stellglied
- 3: Sensor
- 4: Messeinrichtung
- 5, 5', 5": Messelement
- 6: Substrat
- 7: elektrische Verbindung
- 8: Auswerteelektronik
- 9: Durchg.ang
- 10: Ersatzschaltbild
- 11: (Teil-)Spulen
- 12: (Teil-)Elektroden
- 13: separates Substrat
- 14: Kontaktstifte
- 15: Durchgang
- 16: Flexleiter
- 17: Leitung
- 18: Wellscheibe
- 19: Aktorgehäuse
- 20: Anschlag

## Patentansprüche

1. Vorrichtung zur kontaktlosen Abstands- und/oder Positionsbestimmung eines Messobjektes (1), mit einem elektrisch leitfähigen Messobjekt (1) und einem insbesondere nach dem induktiven, dem kapazitiven oder dem Wirbelstrom-Prinzip arbeitenden Sensor (3), wobei der Sensor (3) eine Messeinrichtung (4) aufweist, wobei das Messobjekt (1) in axialer Richtung gesehen gegenüber von der Messeinrichtung (4) an einem beweglichen Objekt (2) angeordnet ist oder integraler Bestandteil des beweglichen Objektes (2) ist und sich mit diesem in axialer Richtung bewegt,
**dadurch gekennzeichnet, dass** die Messeinrichtung (4) durch zumindest zwei räumlich voneinander getrennte Messelemente (5, 5', 5") gebildet ist, dass die Messelemente (5, 5', 5") auf einem gemeinsamen Substrat (6) angeordnet sind und dass das Substrat (6) einen Durchgang (9) für das bewegliche Objekt (2) aufweist.

2. Vorrichtung nach Anspruch 1, **dadurch gekennzeichnet, dass** das Substrat (6) als Leiterplatte oder als, vorzugsweise mehrschichtiges, Keramiksubstrat ausgebildet ist.

3. Vorrichtung nach Anspruch 1 oder 2, **dadurch gekennzeichnet, dass** es sich bei dem beweglichen Objekt (2) um einen Aktor bzw. ein Stellglied (2) handelt.

4. Vorrichtung nach einem der Ansprüche 1 bis 3, **dadurch gekennzeichnet, dass** die Messelemente (5, 5', 5"), insbesondere um den Durchgang (9) herum, konzentrisch zueinander angeordnet sind.

5. Vorrichtung nach einem der Ansprüche 1 bis 4, **dadurch gekennzeichnet, dass** die Messelemente (5, 5', 5") als Elektroden (12) oder als Spulen (11) ausgebildet sind.

6. Vorrichtung nach Anspruch 5, **dadurch gekennzeichnet, dass** die Elektroden (12) parallel geschaltet sind oder dass die Spulen (11) in Reihe geschaltet sind.

7. Vorrichtung nach einem der Ansprüche 1 bis 6, **dadurch gekennzeichnet, dass** die Messelemente (5, 5', 5") eine runde, kreissegmentförmige, ovale oder mehreckige, insbesondere dreieckige oder viereckige, Geometrie aufweisen.

8. Vorrichtung nach einem der Ansprüche 1 bis 7, **dadurch gekennzeichnet, dass** zumindest eines der Messelemente (5, 5', 5") zur Temperaturkompensation mit einer Gleichspannung beaufschlagbar ist oder dass ein Temperatursensor auf dem Substrat angeordnet ist.

9. Vorrichtung nach einem der Ansprüche 1 bis 8, **dadurch gekennzeichnet, dass** eine Auswerteelektronik (8), vorzugsweise auf der Rückseite des Substrats (6) oder auf einem separaten Substrat (13), angeordnet ist.

10. Vorrichtung nach Anspruch 9, **dadurch gekennzeichnet, dass** die Auswerteelektronik (9), über starre Kontaktstifte (14) mit den Messelementen (5, 5', 5") verbunden ist.

11. Vorrichtung nach Anspruch 9, **dadurch gekennzeichnet, dass** die Auswerteelektronik (8) über Flexleiter (16), beispielsweise eine Starr-Flex-Verbindung, mit den Messelementen (5, 5', 5") verbunden ist.

12. Vorrichtung nach einem Ansprüche 1 bis 11, **dadurch gekennzeichnet, dass** das Substrat (6) oder der Sensor (3) über ein Federelement (18) gegen einen Anschlag (20) in einem Aktorgehäuse (19) gedrückt und somit fixiert ist.

## Claims

1. Device for contactless distance and/or position determination of a measurement object (1), having an electrically conductive measurement object (1) and a sensor (3) which operates in particular in accordance with the inductive, capacitive or eddy current principle, wherein the sensor (3) has a measurement device (4), wherein the measurement object (1) when viewed in an axial direction is arranged opposite the measurement device (4) on a movable object (2) or is an integral component of the movable object (2) and moves therewith in an axial direction,
**characterised in that** the measurement device (4) is formed by at least two measurement elements (5, 5', 5") which are spatially separated from each other, **in that** the measurement elements (5, 5', 5'') are arranged on a common substrate (6) and **in that** the substrate (6) has a passage (9) for the movable object (2).

2. Device according to claim 1, **characterised in that** the substrate (6) is constructed as a printed circuit board or as a preferably multi-layered ceramic substrate.

3. Device according to claim 1 or 2, **characterised in that** the movable object (2) is an actuator or an actuation member (2) .

4. Device according to any one of claims 1 to 3,
**characterised in that** the measurement elements (5, 5', 5'') are arranged concentrically with respect to each other, in particular around the passage (9).

5. Device according to any one of claims 1 to 4,
**characterised in that** the measurement elements (5, 5', 5") are constructed as electrodes (12) or as coils (11).

6. Device according to claim 5, **characterised in that** the electrodes (12) are connected in parallel or **in that** the coils (11) are connected in series.

7. Device according to any one of claims 1 to 6,
**characterised in that** the measurement elements (5, 5', 5") have a round, a circle-segment-like, oval or polygonal, in particular triangular or square, geometry.

8. Device according to any one of claims 1 to 7,
**characterised in that** at least one of the measurement elements (5, 5', 5") can be acted on with a DC voltage for temperature compensation or **in that** a temperature sensor is arranged on the substrate.

9. Device according to any one of claims 1 to 8,
**characterised in that** an electronic evaluation unit (8) is arranged preferably on the rear side of the substrate (6) or on a separate substrate (13).

10. Device according to claim 9, **characterised in that** the electronic evaluation unit (9) is connected via rigid contact pins (14) to the measurement elements (5, 5', 5").

11. Device according to claim 9, **characterised in that** the electronic evaluation unit (8) is connected via flexible conductors (16), for example, a rigid/flexible connection, to the measurement elements (5, 5', 5").

12. Device according to any one of claims 1 to 11,
**characterised in that** the substrate (6) or the sensor (3) is pressed via a resilient element (18) against a stop (20) in an actuator housing (19) and is consequently fixed.

## Revendications

1. Dispositif de détermination sans contact de distance et/ou de position d'un objet à mesurer (1), avec un objet à mesurer (1) électro-conducteur et un capteur (3) fonctionnant plus particulièrement selon le principe inductif, capacitif ou avec des courants de Foucault, le capteur (3) comprenant un dispositif de mesure (4), l'objet à mesurer (1) étant disposé sur un objet mobile (2), vu dans la direction axiale, en face du dispositif de mesure (4) ou faisant partie intégrante de l'objet mobile (2) et se déplace avec celui-ci dans la direction axiale,
**caractérisé en ce que** le dispositif de mesure (4) étant constitué d'au moins deux éléments de mesure (5, 5', 5") physiquement séparés entre eux, **en ce que** les éléments de mesure (5, 5', 5") sont disposés sur un substrat (6) commun et **en ce que** le substrat (6) comprend un passage (9) pour l'objet mobile (2).

2. Dispositif selon la revendication 1, **caractérisé en ce que** le substrat (6) est conçu comme un circuit imprimé ou comme un substrat céramique, de préférence multicouche.

3. Dispositif selon la revendication 1 ou 2, **caractérisé en ce que** l'objet mobile (2) est un actionneur ou un organe de réglage (2).

4. Dispositif selon l'une des revendications 1 à 3, **caractérisé en ce que** les éléments de mesure (5, 5', 5") sont disposés de manière concentrique entre eux, plus particulièrement autour du passage (9).

5. Dispositif selon l'une des revendications 1 à 4, **caractérisé en ce que** les éléments de mesure (5, 5', 5") sont conçus comme des électrodes (12) ou comme des bobines (11).

6. Dispositif selon la revendication 5, **caractérisé en ce que** les électrodes (12) sont branchées en parallèle ou **en ce que** les bobines (11) sont branchées en série.

7. Dispositif selon l'une des revendications 1 à 6, **caractérisé en ce que** les éléments de mesure (5, 5', 5") présentent une géométrie ronde, en forme de segments circulaires, ovale ou polygonale, plus particulièrement triangulaire ou quadrangulaire.

8. Dispositif selon l'une des revendications 1 à 7, **caractérisé en ce qu'**au moins un des éléments de mesure (5, 5', 5") peut être alimenté avec une tension continue pour la compensation de température ou **en ce qu'**un capteur de température est disposé sur le substrat.

9. Dispositif selon l'une des revendications 1 à 8, **caractérisé en ce qu'**une électronique d'analyse (8) est disposée de préférence sur le côté arrière du substrat (6) ou sur un substrat séparé (13).

10. Dispositif selon la revendication 9, **caractérisé en ce que** l'électronique d'analyse (9) est reliée avec les éléments de mesure (5, 5', 5") par l'intermédiaire de broches de contact rigides (14).

11. Dispositif selon la revendication 9, **caractérisé en ce que** l'électronique d'analyse (8) est reliée avec les éléments de mesure (5, 5', 5") par l'intermédiaire de conducteurs flexibles (16), par exemple une liaison rigide-flexible.

12. Dispositif selon l'une des revendications 1 à 11, **caractérisé en ce que** le substrat (6) ou le capteur (3) est comprimé et donc fixé, par l'intermédiaire d'un élément de ressort (18) contre une butée (20) dans un boîtier d'actionneur (19).
